# EUROPEAN PATENT APPLICATION

(11) **EP 4 741 336 A1**
(43) Date of publication of application: **13.05.2026**
(21) Application number: 24212386.7
(22) Date of filing: 12.11.2024
(51) Int. Cl.: C01B 3/04, B01J 8/04, B01J 19/24, B01J 8/00

(54) **PROCESS FOR EXCHANGING A PACKED BED FROM A PRE-CRACKING REACTOR**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Ulber, Dieter, 60439 Frankfurt am Main (DE); Knoedl, Dominik, 60439 Frankfurt am Main (DE); Lutz, Michael, 60439 Frankfurt am Main (DE); Doomra, Arsh, 60439 Frankfurt am Main (DE); Vicari, Lorenzo, 60439 Frankfurt am Main (DE)
(74) Representative: Air Liquide

(57) **Abstract**

Process for exchanging a packed bed from a pre-cracking reactor (201) of an installation (200) for producing a hydrogen product from an ammonia feedstock stream, comprising the following steps:
• opening (2) the bypass line valve (211) to open the bypass line (210),
• closing (3) the pre-cracking reactor inlet valve (213) and the pre-cracking reactor outlet valve (214) to isolate the pre-cracking reactor (201),
• unloading (4) the packed bed from the pre-cracking reactor (201),
• loading (5) a new packed bed inside the pre-cracking reactor (201),
• opening (6) the pre-cracking reactor inlet valve and the pre-cracking reactor outlet valve,
the process being performed while:
- providing (100) an ammonia feedstock stream,
- in the main ammonia cracking reactor (203), performing (101) an endothermic reaction of ammonia cracking for producing said hydrogen product with said provided ammonia feedstock stream as a feed.

## Description

The field of the present invention is that of a process for producing hydrogen product from ammonia. The present invention also relates to a system for producing hydrogen product from ammonia.

Ammonia Cracking is a new technology for large scale hydrogen production.

The production of a hydrogen product by an endothermic cracking reaction of ammonia feedstock can be done in a cracking reactor at elevated temperature.

Systems comprising an adiabatic pre-cracking reactor followed by a cracking reactor for producing hydrogen from ammonia are known from the prior art. Pre-cracking is an important step in the overall cracking process in order to have high heat integration and not co-produce export steam.

The cracking reactor and the pre-cracking reactor can typically contain one or several packed beds, for example containing precious and non-precious metal catalysts.

However, those packed beds can be damaged by poisons, excursions or by fast aging.

As packed bed examples, both the Ruthenium and the high Nickel containing catalysts are sensitive to catalyst poisons. Ammonia can contain poisons, originating from oil-lubricated compressors or from ship transport. Also the small water content (0.2-0.5%) in industrial ammonia can be detrimental to certain catalysts. Upset operating conditions, like temperature excursions, in the pre-cracker or cracker can also lead to loss of catalyst performance by thermal or hydrothermal aging and agglomeration of the catalyst particles. Furthermore, the ammonia pre-cracking catalysts are newly developed products without a long-term industrial reference. Catalyst vendors cannot provide long catalyst guaranteed lifetimes of 3-4 years as requested by customers.

It is then necessary to regularly exchange said catalysts creating long plant standstill and hydrogen production loss.

This exchange poses particularly crucial safety issues when the process implies ammonia, as it is more dangerous and toxic than natural gas.

There is currently a need for a maintenance process allowing to exchange one or several packed bed while managing the toxicity of the ammonia and while preserving safe operating conditions.

There is currently a need to improve the plant yield for the production of hydrogen from ammonia at a reasonable cost.

An aim of the present invention is to improve the hydrogen production in order to increase the yield of the pre-cracking and cracking stages and reduce the cost of the production method.

For this purpose, the invention proposes a process for exchanging a packed bed from a pre-cracking reactor of an installation for producing a hydrogen product from an ammonia feedstock stream, the installation comprising:
- a feed end of the installation,
- said pre-cracking reactor configured to contain said packed bed, said pre-cracking reactor being arranged for receiving the ammonia feedstock stream from said feed end to produce a partially converted ammonia stream,
- a main ammonia cracking reactor, arranged for receiving the partially converted ammonia stream,
- a bypass line arranged for routing the ammonia feedstock stream to the main ammonia cracking reactor while bypassing the pre-cracking reactor, said bypass line comprising a bypass line valve, arranged to fluidically open or close said bypass line,
- a pre-cracking reactor inlet valve and a pre-cracking reactor outlet valve, arranged to fluidically isolate the pre-cracking reactor from said feed end and from said main ammonia cracking reactor,

the process for exchanging the packed bed comprising the following steps:
   - opening the bypass line valve to open the bypass line,
   - closing the pre-cracking reactor inlet valve and the pre-cracking reactor outlet valve to isolate the pre-cracking reactor,
   - unloading the packed bed from the pre-cracking reactor,
   - loading a new packed bed inside the pre-cracking reactor,
   - opening the pre-cracking reactor inlet valve and the pre-cracking reactor outlet valve,
the process being performed while:
   - providing an ammonia feedstock stream,
   - in the main ammonia cracking reactor, performing an endothermic reaction of ammonia cracking for producing said hydrogen product with said provided ammonia feedstock stream as a feed.

The process may comprise one or more of the following optional features alone or in combination:

The process is performed while routing the provided ammonia feedstock stream to the main ammonia cracking reactor for performing said endothermic reaction of ammonia cracking.

The bypass line is arranged for routing the ammonia feedstock stream from the feed end of the installation to the main ammonia cracking reactor while bypassing the pre-cracking reactor.

In particular, the steps of unloading the packed bed from the pre-cracking reactor and loading a new packed bed inside the pre-cracking reactor are performed while routing the provided ammonia feedstock stream to the main ammonia cracking reactor, in particular from the feed end of the installation to the main ammonia cracking reactor, through said bypass line.

The packed bed comprises bulk material and/or a structured packing.

The packed bed comprises:
- A main catalyst configured for promoting said endothermic reaction of ammonia pre-cracking,
- Alternatively or in addition, a guard layer comprising an absorbent and/or a secondary catalyst configured for removing catalyst poisons from the ammonia feedstock stream.

In particular, the guard layer is configured to be arranged in the pre-cracking reactor upstream the main catalyst.

The step of unloading and/or loading the packed bed may consist in respectively unloading and/or loading a portion of a reactor packing filling the pre-cracking reactor, for example:
- Unloading and loading the guard layer,
- Unloading and loading the main catalyst.

Alternatively, the step of unloading and/or loading the packed bed may consist in unloading and/or loading the totality of said reactor packing filling the pre-cracking reactor.

The use of a bypass line allows to perform an online exchange of the packed bed without interrupting the production of the hydrogen product.

The invention advantageously increases the plant capacity since the whole plant does not need to be shut down, re-started and re-heated during the exchange of the packed bed. Consumption and start up time can be minimized.

The step of closing the pre-cracking reactor inlet valve and the pre-cracking reactor outlet valve allows to positively isolate the pre-cracking reactor.

The step of providing an ammonia feedstock stream comprises a step of pre-heating the ammonia feedstock stream, performed in a feed pre-heater, thereby producing a pre-heated ammonia stream.

The pre-cracking reactor is arranged to perform an endothermic reaction of pre-cracking the provided ammonia feedstock stream, in particular the pre-heated ammonia stream, thus producing the partially converted ammonia stream.

As the reaction of ammonia pre-cracking is endothermic, the temperature of the partially converted ammonia stream is lower than the temperature of the pre-heated ammonia stream.

The step of providing an ammonia feedstock stream comprises a step of superheating the pre-heated ammonia stream routed through the bypass line and/or the partially converted ammonia stream, performed in a feed superheater, thereby producing a superheated ammonia feedstock stream.

The process comprises a step of reducing the load of the installation.

The step of reducing the load of the installation is performed before the step of opening the bypass line valve to open the bypass line.

The step of reducing the load of the installation comprises a step of reducing the flow rate of the provided ammonia feedstock stream, in particular reducing the flow rate of the provided ammonia feedstock stream below 90% of the initial flow rate, in particular below 80% of the initial flow rate.

The process comprises a step of reducing the temperature of the pre-heated ammonia stream performed before the step of opening the bypass line valve to open the bypass line.

Advantageously, the step of reducing the temperature of the pre-heated ammonia stream avoids exposing equipment, such as the feed superheater, to the high temperatures of the pre-heated ammonia stream when the pre-heated ammonia stream is routed directly to the feed superheater, when no endothermic ammonia pre-cracking reaction is performed. This avoids material problems in connection with high temperature ammonia being in contact with said equipment.

The process comprises a step of depressurizing the pre-cracking reactor, this step being performed after the step of closing the pre-cracking reactor inlet valve and the pre-cracking reactor outlet valve, and before the step of unloading the packed bed from the pre-cracking reactor.

The step of depressurizing the pre-cracking reactor comprises a step of discharging at least a portion of the gas inside the pre-cracking reactor from said pre-cracking reactor.

The installation comprises a fired equipment arranged to perform a combustion of a waste gas.

Said fired equipment may be a flare.

The process comprises a step of routing said discharged portion of the gas to the fired equipment as a portion of the waste gas.

The process comprises a step of pressurizing the pre-cracking reactor, this step being performed after the step of loading the new packed bed inside the pre-cracking reactor.

The step of pressurizing the pre-cracking reactor can for example be done before the step of opening the pre-cracking reactor inlet valve and the pre-cracking reactor outlet valve, or while slowly opening the pre-cracking reactor inlet valve and the pre-cracking reactor outlet valve.

The process comprises a step of oxidizing the packed bed of the pre-cracking reactor, this step being performed before the step of unloading the packed bed from the pre-cracking reactor.

The process comprises a step of purging the pre-cracking reactor with nitrogen by routing a purging nitrogen stream through the pre-cracking reactor.

In particular, the step of oxidizing the packed bed comprises adding an oxidant stream, such as air, to the purging nitrogen stream before routing said purging nitrogen stream through the pre-cracking reactor.

The step of purging the pre-cracking reactor comprises a step of routing the purging nitrogen stream from the pre-cracking reactor to the fired equipment as a portion of the waste gas or to an open vent.

For example, the step of purging the pre-cracking reactor is performed by routing the purging nitrogen stream through the pre-cracking reactor from the outlet of the pre-cracking reactor to the inlet of the pre-cracking reactor or routing the purging nitrogen stream through the pre-cracking reactor from the inlet of the pre-cracking reactor to the outlet of the pre-cracking reactor. In particular, the inlet and the outlet are defined by the direction of the circulation of the ammonia feedstock stream or the pre-heated ammonia stream when the pre-cracking reactor performs an endothermic reaction of ammonia pre-cracking.

The step of purging the pre-cracking reactor can be continued during the step of unloading the packed bed and loading the new packed bed.

The process comprises a step of cooling the pre-cracking reactor before exchanging the packed bed.

The step of loading the new packed bed is performed by sock loading or any other reactor loading technique.

The process comprises a step of purging the air from the pre-cracking reactor, performed after the step of loading a new packed bed inside the pre-cracking reactor, and before the step of opening the pre-cracking reactor inlet valve and the pre-cracking reactor outlet valve.

The step of purging the air from the pre-cracking reactor is performed by routing an ammonia purging stream through the pre-cracking reactor.

The step of purging the pre-cracking reactor is performed by routing the ammonia purging stream through the pre-cracking reactor from the inlet of the pre-cracking reactor to the outlet of the pre-cracking reactor or by routing the ammonia purging stream through the pre-cracking reactor from the outlet of the pre-cracking reactor to the inlet of the pre-cracking reactor.

The step of purging the air from the pre-cracking reactor comprises a step of routing the ammonia purging stream from the pre-cracking reactor to a safe location, this safe location being for example a high point distant from platforms and structures or any other location to avoid toxic or explosive gas could harm people

The process comprises a step of heating up the new packed bed of the pre-cracking reactor.

The step of heating up the new packed bed is performed after the step of loading a new packed bed inside the pre-cracking reactor. In particular, the step of heating up the new packed bed is performed after the step of purging the air from the pre-cracking reactor.

The step of heating up the new packed bed from the pre-cracking reactor comprises:
- a step of fluidically connecting the pre-cracking reactor to a start-up loop of the installation,
- flowing a nitrogen heat-up stream through the start-up loop and the pre-cracking reactor.

The step of flowing the nitrogen heat-up stream through the start-up loop and the pre-cracking reactor comprises:
- a step of feeding the nitrogen heat-up stream to the start-up loop,
- a step of compressing the nitrogen heat-up stream, performed in a startup compressor,
- at least a step of heating the nitrogen heat-up stream,
- a step of flowing the nitrogen heat-up stream through the pre-cracking reactor.

At least a step of heating the nitrogen heat-up stream is performed in a heat exchanger.

At least a step of heating the nitrogen heat-up stream is performed in an electrical heater.

Alternatively, the step of heating up the new packed bed from the pre-cracking reactor comprises routing said ammonia feedstock stream that has been heated or routing said pre-heated ammonia stream through the pre-cracking reactor, after the step of opening the pre-cracking reactor inlet valve and the pre-cracking reactor outlet valve.

The process comprises a step of reducing the new packed bed of the pre-cracking reactor, this step being performed after the step of loading the new packed bed to the pre-cracking reactor.

The step of reducing the new packed bed of the pre-cracking reactor is performed after the step of loading a new packed bed inside the pre-cracking reactor. In particular, the step of reducing the new packed bed is performed after the step of purging the air from the pre-cracking reactor. More particularly, the step of reducing the new packed bed is performed after the step of heating up the new packed bed.

The step of reducing the new packed bed of the pre-cracking reactor comprises:
- a step of fluidically connecting the pre-cracking reactor to a start-up loop of the installation, in particular to said start-up loop,
- a step of flowing a reduction stream comprising hydrogen through the start-up loop and the pre-cracking reactor.

Said reduction stream may comprise hydrogen and nitrogen.

In particular, the step of reducing the new packed bed of the pre-cracking reactor comprises a step of adding hydrogen to the nitrogen heat-up stream and flowing the resulting mix through the start-up loop as said reduction stream.

Alternatively, the step of reducing the new packed bed of the pre-cracking reactor can be performed by routing any of the following streams through the pre-cracking reactor:
- a PSA offgas stream,
- an ammonia stream, for example an ammonia stream routed from the provided ammonia feedstock stream or from the feed superheater,
- a cracked gas stream.

The process comprises a step of increasing the load of the installation, this step being performed after the step of loading the new packed bed to the pre-cracking reactor.

In particular, the step of increasing the load of the installation is performed after the step of purging the air from the pre-cracking reactor. More particularly, the step of increasing the load of the installation is performed after the step of heating up the new packed bed. Even more particularly, the step of increasing the load of the installation is performed after the step of reducing the new packed bed of the pre-cracking reactor.

The step of increasing the load of the installation comprises a step of increasing the flow rate of the provided ammonia feedstock stream, in particular increasing the flow rate of the provided ammonia feedstock stream to reach said initial flow rate, in particular to reach the flow rate of the ammonia feedstock stream before the step of reducing the load of the installation.

The process comprises a step of increasing the temperature of the pre-heated ammonia stream.

The process comprises a step of closing the bypass line valve to close the bypass line.

In one embodiment, the process comprises a step of routing a first part of the ammonia feedstock stream to the pre-cracking reactor for performing an endothermic reaction of ammonia pre-cracking and routing a second part of the ammonia feedstock stream through the bypass line to the main ammonia cracking reactor for performing an endothermic reaction of ammonia cracking and a step of controlling a flow rate of the ammonia feedstock stream through the bypass line by controlling the bypass line valve opening, such as to control the temperature at the feed superheater.

The step of controlling the flow rate of the provided ammonia feedstock stream through the bypass line allows to control a proportion of ammonia feedstock stream undergoing an endothermic reaction of ammonia pre-cracking in the pre-cracking reactor and a proportion of the ammonia feedstock stream fed to the superheater without undergoing such endothermic reaction. This allows to control a temperature level in the superheater, in particular a temperature level of a heat exchange coil of the superheater.

The process comprises a step of opening the bypass line valve to open the bypass line during a start-up of the installation and a step of routing at least a portion of the ammonia feedstock stream through the bypass line during said start-up for performing an endothermic reaction of ammonia cracking.

Advantageously, the step of routing a portion of the ammonia feedstock stream through the bypass line during said start-up allows to reduce the time needed for the start-up phase and optimizes the hydrogen and nitrogen production since the plant readily performs ammonia cracking, typically at a reduced load, during start-up.

The invention also proposes an installation for producing a hydrogen product from an ammonia feedstock stream, said installation comprising:
- a feed end of the installation,
- a pre-cracking reactor configured to contain a packed bed and arranged for receiving the ammonia feedstock stream from said feed end to produce a partially converted ammonia stream,
- a main ammonia cracking reactor arranged for receiving the partially converted ammonia stream,
- a bypass line said bypass line comprising:
   - a bypass line valve, arranged to fluidically open or close said bypass line,
   - a bypass line duct arranged for routing the ammonia feedstock stream to the main ammonia cracking reactor while bypassing the pre-cracking reactor,

- a pre-cracking reactor inlet valve and a pre-cracking reactor outlet valve arranged to fluidically isolate the pre-cracking reactor from said feed end and from said main ammonia cracking reactor.

The installation may comprise one or more of the following optional features alone or in combination:

The packed bed comprises bulk material and/or a structured packing.

The packed bed comprises:
- A main catalyst configured for promoting said endothermic reaction of ammonia pre-cracking,
- Alternatively or in addition, a guard layer comprising an absorbent and/or a secondary catalyst configured for removing catalyst poisons from the ammonia feedstock stream.

In particular, the guard layer is configured to be arranged in the pre-cracking reactor upstream the main catalyst.

The bypass line duct is arranged for routing the ammonia feedstock stream from the feed end of the installation to the main ammonia cracking reactor while bypassing the pre-cracking reactor.

The installation comprises at least two pre-cracking reactors for example two pre-cracking reactors, and at least two bypass line, each pre-cracking reactor being associated to a bypass line.

The main ammonia cracking reactor is arranged to perform an endothermic reaction of ammonia cracking for producing said hydrogen product with said provided ammonia feedstock stream as a feed.

The installation comprises a feed pre-heater arranged for pre-heating the ammonia feedstock stream, thereby producing a pre-heated ammonia stream.

The installation comprises a feed superheater arranged for superheating the pre-heated ammonia stream routed through the bypass line duct and/or the partially converted ammonia stream, thereby producing a superheated ammonia feedstock stream.

The pre-cracking reactor inlet valve is arranged between said feed end and an inlet of the pre-cracking reactor, in particular between the feed pre-heater and an inlet of the pre-cracking reactor, and the pre-cracking reactor outlet valve is arranged between an outlet of the pre-cracking reactor and the main reactor, in particular between an outlet of the pre-cracking reactor and the feed superheater.

The bypass line comprises a first extremity connected between said feed end and the pre-cracking reactor inlet valve, in particular between the feed pre-heater and the pre-cracking reactor inlet valve, and a second extremity connected between the pre-cracking reactor outlet valve and the main ammonia cracking reactor, in particular between the pre-cracking reactor outlet valve and the feeds preheater.

The pre-cracking reactor is arranged to perform an endothermic reaction of pre-cracking the ammonia feedstock stream, in particular the pre-heated ammonia stream in the pre-cracker thus producing the partially converted ammonia stream.

The feed pre-heater comprises a heat exchange coil or tube bundle configured for pre-heating the ammonia feedstock stream by heat exchange with a heating medium.

The feed superheater comprises a heat exchange coil configured for superheating the pre-heated ammonia stream and/or the partially converted ammonia stream by heat exchange with a heating medium.

The installation comprises a fired equipment arranged to perform a combustion of a waste gas.

Said fired equipment may be a flare.

The installation comprises a start-up loop arranged for the circulation of a start-up gas stream through the pre-cracking reactor.

The start-up loop is arranged for the circulation of a hydrogen stream and/or nitrogen stream through the pre-cracking reactor.

The start-up loop comprises:
- a startup compressor arranged for compressing the start-up gas stream,
- a heat exchanger arranged for heating the start-up gas stream,
- an electrical or steam heater arranged for heating the start-up gas stream.

The start-up loop comprises a start-up loop inlet valve and a start-up loop outlet valve arranged to fluidically connect or isolate the start-up loop from the pre-cracking reactor.

The installation comprises a nitrogen stream purge line arranged for routing a purging nitrogen stream through the pre-cracking reactor.

The nitrogen stream purge line comprises:
- a nitrogen supply duct arranged for routing the purging nitrogen stream to the pre-cracking reactor.
- a purge discharge duct arranged for routing the purging nitrogen stream from the pre-cracking reactor to the fired equipment as a portion of the waste gas or to an open vent,
- at least one nitrogen stream purging valve arranged to open or to close the nitrogen stream purge line.

The installation comprises a fired equipment waste gas duct arranged for routing the purging nitrogen stream from the pre-cracking reactor to the fired equipment as a portion of the waste gas, and a fired equipment waste gas valve arranged to open or to close the fire equipment waste gas duct.

The installation comprises at least one double block and bleed valve, said double block and bleed valve comprising:
- two shut-off valves fluidically arranged in series, each shut-off valve being configured for, in a closed position of the shut-off valve, preventing a gas stream from circulating,
- a bleed valve fluidically connected between said two shut off valves to purge a gas contained between said shut-off valves in said closed position

The bypass line valve and/or the pre-cracking reactor inlet valve and/or the pre-cracking reactor outlet valve and/or the start-up loop inlet valve and/or the start-up loop outlet valve and/or the nitrogen stream purging valve and/or the fired equipment waste gas valve is a double block and bleed valve.

The installation may be configured to purge said purge gas to a flare.

The installation comprises purging ducts arranged to purge said purge gas to the fired equipment.

Advantageously, the use of double block and bleed valves allows to fluidically shut down portions of the ducts and isolated portions of the installation and prevent them from any gas leak.

Advantageously, this allows to exchange the packed bed without exposing people to the toxicity of the ammonia circulating through the installation.

The installation comprises an ammonia discharge duct arranged for routing the ammonia purging stream from the pre-cracking reactor to a safe location.

Further features, details and advantages of the invention will become more clearly apparent from reading the description given below by way of indication with reference to the drawings, in which:
[Fig 1] Figure 1 is a schematic representation of the installation of the invention.
[Fig 2] Figure 2 is a schematic view of the process for exchanging a packed bed from a pre-cracking reactor according to the invention.
[Fig 3] Figure 3 is a schematic view of a process for producing hydrogen product from ammonia as performed by the installation.

It should first of all be noted that the figures disclose the invention in a detailed manner so as to implement the invention, and said figures may of course serve to define the invention more clearly, where necessary.

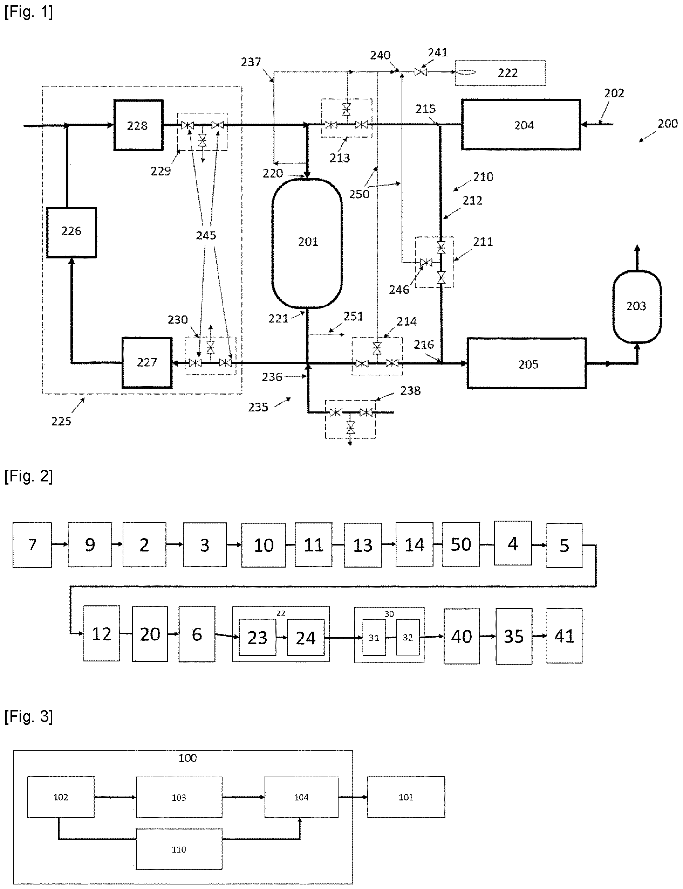

Figure 1 is a schematic view an installation 200 for producing a hydrogen product from an ammonia feedstock stream.

The installation 200 comprises a feed end 202 of the installation.

The installation 200 comprises a pre-cracking reactor 201 containing a packed bed, said pre-cracking reactor 201 being arranged for receiving the ammonia feedstock stream from said feed end 202 and for performing an endothermic reaction of pre-cracking the ammonia feedstock stream, in particular the pre-heated ammonia stream in the pre-cracker thus producing the partially converted ammonia stream.

The packed bed is configured for promoting said endothermic reaction of ammonia pre-cracking.

The packed bed comprises:
- A main catalyst configured for promoting said endothermic reaction of ammonia pre-cracking,
- Alternatively or in addition, a guard layer comprising an absorbent and/or a secondary catalyst configured for promoting a reaction of catalyst poisons.

The guard layer is placed upstream the main catalyst in the pre-cracking reactor 201 in the direction of the ammonia feed stream, and is arranged to protect the main catalyst from catalyst poisons.

The installation 200 comprises a main ammonia cracking reactor 203, arranged for receiving the partially converted ammonia stream and for performing an endothermic reaction of ammonia cracking for producing said hydrogen product with said provided ammonia feedstock stream as a feed.

The installation 200 comprises a feed pre-heater 204 arranged for pre-heating the ammonia feedstock stream, thereby producing a pre-heated ammonia stream. The feed pre-heater 204 comprises a heat exchange coil configured for pre-heating the ammonia feedstock stream by heat exchange with a heating medium.

The installation 200 comprises a feed superheater 205 arranged for superheating the pre-heated ammonia stream routed through the bypass line duct and/or the partially converted ammonia stream, thereby producing a superheated ammonia feedstock stream.

The feed superheater 205 comprises a heat exchange coil or tube bundle configured for superheating the pre-heated ammonia stream and/or the partially converted ammonia stream by heat exchange with a heating medium.

The installation 200 comprises a bypass line 210 arranged for routing the ammonia feedstock stream from a feed end 202 of the installation to the main ammonia cracking reactor 203 while bypassing the pre-cracking reactor 201. The bypass line 210 comprises:
- a bypass line valve 211, arranged to fluidically open or close said bypass line,
- a bypass line duct 212 arranged for routing the ammonia feedstock stream to the main ammonia cracking reactor 203 while bypassing the pre-cracking reactor 201,

According to an embodiment of the invention not shown here, the installation 200 comprises at least two pre-cracking reactors 201 for example two pre-cracking reactors, and at least two bypass line, each pre-cracking reactor 201 being associated to a bypass line 210.

The installation 200 comprises a pre-cracking reactor inlet valve 213 and a pre-cracking reactor outlet valve 214, arranged to fluidically isolate the pre-cracking reactor 201 from said feed end 202 and from said main ammonia cracking reactor 203.

The bypass line 210 comprises a first extremity 215 connected between said feed end 202 and the pre-cracking reactor inlet valve 213, in particular between the feed pre-heater 204 and the pre-cracking reactor inlet valve 213, and a second extremity 216 connected between the pre-cracking reactor outlet valve 214 and the main ammonia cracking reactor, in particular between the pre-cracking reactor outlet valve 214 and the feed superheater 205.

The pre-cracking reactor inlet valve 213 is arranged between said feed end 202 and an inlet of the pre-cracking reactor 201, in particular between the feed pre-heater 204 and an inlet 220 of the pre-cracking reactor, and the pre-cracking reactor outlet valve 214 is arranged between an outlet 221 of the pre-cracking reactor 201 and the main reactor, in particular between an outlet 221 of the pre-cracking reactor 201 and the feed superheater 205.

The installation 200 comprises a fired equipment 222, for example a flare arranged to perform a combustion of a waste gas.

The installation 200 comprises a start-up loop 225 arranged for the circulation of a start-up loop stream, for example a hydrogen stream and/or nitrogen stream through the pre-cracking reactor 201.

The start-up loop 225 comprises:
- a startup compressor 226 arranged for compressing the start-up loop stream,
- a heat exchanger 227 arranged for heating the start-up loop stream,
- an electrical or steam heater 228 arranged for heating the start-up loop stream,
- a start-up loop inlet valve 229 and a start-up loop outlet valve 230 arranged to fluidically connect or isolate the start-up loop 225 from the pre-cracking reactor 201.

The startup loop comprises a start-up cooler and a start-up separator, not represented here, arranged to condition the gas so that it can be recycled to the start-up compressor.

The installation 200 comprises a nitrogen stream purge line 235 comprising:
- a nitrogen supply duct 236 arranged for routing a purging nitrogen stream to the pre-cracking reactor 201,
- a purge discharge duct 237 arranged for routing the purging nitrogen stream from the pre-cracking reactor 201 to the fired equipment 222 as a portion of the waste gas or to an open vent,
- at least one nitrogen stream purging valve 238 arranged to open or to close the nitrogen stream purge line.

The nitrogen stream purge line 235 is arranged for routing said purging nitrogen stream through the pre-cracking reactor 201.

The installation 200 comprises a fired equipment waste gas duct 240 arranged for routing the purging nitrogen stream from the pre-cracking reactor 201 to the fired equipment 222 as a portion of the waste gas, and a fired equipment waste gas valve 241 arranged to open or to close the fire equipment waste gas duct.

The bypass line valve 211, the pre-cracking reactor inlet valve 213, the pre-cracking reactor outlet valve 214, the start-up loop inlet valve 229, the start-up loop outlet valve 230, the nitrogen stream purging valve 238 and the fired equipment waste gas valve 241 are double block and bleed valves, each comprising:
- two shut-off valves 245 fluidically arranged in series, each shut-off valve being configured for, in a closed position of the shut-off valve, preventing a gas stream from circulating,
- a bleed valve 246 fluidically connected between said two shut off valves 245 to purge a gas contained between said shut-off valves in said closed position.

The installation 200 is be configured to purge said purge gas to the flare and comprises purging ducts 250 arranged to purge said purge gas to the fired equipment 222.

Advantageously, the use of double block and bleed valves allows to fluidically shut down portions of the ducts and isolated portions of the installation 200 and prevent them from any gas leak.

The installation 200 comprises an ammonia discharge duct 251 arranged for routing the ammonia purging stream from the pre-cracking reactor 201 to a safe location.

Figure 2 is a schematic view of the process for exchanging a packed bed from a pre-cracking reactor 201 according to the invention.

This process is performed while maintaining the production of a hydrogen product from a provided ammonia feedstock stream as performed by the installation 200. In particular, this process is performed while routing the provided ammonia feedstock stream to the main ammonia cracking reactor 203 for performing an endothermic reaction of ammonia cracking.

The bypass line is arranged for routing the ammonia feedstock stream from the feed end of the installation to the main ammonia cracking reactor while bypassing the pre-cracking reactor.

Said process of production of the hydrogen product from the provided ammonia feedstock stream is further described on the figure 3.

The process for exchanging the packed bed comprising the following steps:
- a step 2 of opening the bypass line valve 211 to open the bypass line 210,
- a step 3 of closing the pre-cracking reactor inlet valve 213 and the pre-cracking reactor outlet valve 214 to isolate the pre-cracking reactor 201,
- a step 4 of unloading the packed bed from the pre-cracking reactor 201,
- a step 5 of loading a new packed bed inside the pre-cracking reactor 201, for example by sock loading or any other reactor loading technique.
- a step 6 of opening the pre-cracking reactor inlet valve 213 and the pre-cracking reactor outlet valve 214.

The steps of unloading 4 the packed bed from the pre-cracking reactor 201 and loading 5 a new packed bed inside the pre-cracking reactor 201 are performed while routing the provided ammonia feedstock stream to the main ammonia cracking reactor 203, in particular from the feed end of the installation to the main ammonia cracking reactor, through said bypass line 210.

The packed bed may comprise bulk material (the bed is randomly packed at least partially) and/or a structured packing

The packed bed comprises:
- A main catalyst configured for promoting said endothermic reaction of ammonia pre-cracking,
- Alternatively or in addition, a guard layer comprising an absorbent and/or a secondary catalyst configured for removing catalyst poisons from the ammonia feedstock stream.

The packed bed is configured for promoting said endothermic reaction of ammonia pre-cracking.

The steps of unloading 4 and loading 5 the packed bed may consist in respectively unloading and loading a portion of a reactor packing filling the pre-cracking reactor, for example:
- Unloading and loading the guard layer,
- Unloading and loading the main catalyst.

After the step 4 of unloading the packed bed, a portion of a reactor packing filling the pre-cracking reactor, for example a catalyst, absorbent, or any other portion of the reactor packing, can still be present inside the pre-cracking reactor.

Alternatively, the steps of unloading and loading the packed bed may consist in unloading and loading the totality of said reactor packing filling the pre-cracking reactor.

The invention advantageously increases the plant capacity since the whole plant does not need to be shut down, re-started and re-heated during the exchange of the packed bed, as the use of a bypass line 210 allows to perform an online exchange of the packed bed without interrupting the production of the hydrogen product. Consumption and start up time can be minimized.

The step 3 of closing the pre-cracking reactor inlet valve 213 and the pre-cracking reactor outlet valve 214 allows to positively isolate the pre-cracking reactor 201 before the exchange of the packed bed.

The process comprises a step 7 of reducing the load of the installation 200. The step 7 of reducing the load of the installation 200 comprises a step of reducing the flow rate of the provided ammonia feedstock stream, in particular reducing the flow rate of the provided ammonia feedstock stream below 90% of the initial flow rate, in particular below 80% of the initial flow rate.

The process comprises a step 9 of reducing the temperature of the pre-heated ammonia stream.

Advantageously, this step 9 of reducing the temperature of the pre-heated ammonia stream avoids exposing equipment, such as the feed superheater 205 to the high temperatures of the pre-heated ammonia stream when the pre-heated ammonia stream is routed directly to the feed superheater 205, superheater, when no endothermic ammonia pre-cracking reaction is performed. This avoids material problems in connection with high temperature ammonia being in contact with said equipment.

The process comprises a step 10 of depressurizing the pre-cracking reactor 201. This step 10 of depressurizing the pre-cracking reactor 201 comprises a step of discharging at least a portion of the gas inside the pre-cracking reactor 201 from said pre-cracking reactor.

The process comprises a step 11 of routing said discharged portion of the gas to the fired equipment 222 as a portion of the waste gas.

The process comprises a step 12 of pressurizing the pre-cracking reactor 201, this step being performed after the step of loading the new packed bed inside the pre-cracking reactor. The step of pressurizing the pre-cracking reactor can for example be done before the step of opening the pre-cracking reactor inlet valve and the pre-cracking reactor outlet valve, or while slowly opening the pre-cracking reactor inlet valve and the pre-cracking reactor outlet valve.

The process comprises a step 13 of oxidizing the packed bed of the pre-cracking reactor 201, this step being performed before the step of unloading the packed bed from the pre-cracking reactor 201.

The process comprises a step 14 of purging the pre-cracking reactor 201 with nitrogen by routing a purging nitrogen stream through the pre-cracking reactor 201, comprising a step of routing the purging nitrogen stream from the pre-cracking reactor 201 to the fired equipment 222 as a portion of the waste gas or to an open vent.

In particular, the step 13 of oxidizing the packed bed comprises adding air to the purging nitrogen stream before routing said purging nitrogen stream through the pre-cracking reactor.

This step 14 of purging the pre-cracking reactor 201 is performed by routing the purging nitrogen stream through the pre-cracking reactor 201 from the outlet of the pre-cracking reactor to the inlet of the pre-cracking reactor, or routing the purging nitrogen stream through the pre-cracking reactor from the inlet of the pre-cracking reactor to the outlet of the pre-cracking reactor or by routing the ammonia purging stream through the pre-cracking reactor from the outlet of the pre-cracking reactor to the inlet of the pre-cracking reactor.

In particular, the inlet and the outlet are defined by the direction of the circulation of the ammonia feedstock stream or the pre-heated ammonia stream when the pre-cracking reactor 201 performs an endothermic reaction of ammonia pre-cracking.

The process comprises a step 50 of cooling the pre-cracking reactor before exchanging the packed bed.

The process comprises a step 20 of purging the air from the pre-cracking reactor 201, performed by routing an ammonia purging stream through the pre-cracking reactor 201 from the inlet of the pre-cracking reactor to the outlet of the pre-cracking reactor. This step comprises a step of routing the ammonia purging stream from the pre-cracking reactor 201.

The process comprises a step 22 of heating up the new packed bed of the pre-cracking reactor 201 comprising:
- a step 23 of fluidically connecting the pre-cracking reactor 201 to a start-up loop of the installation 200,
- a step 24 of flowing a nitrogen heat-up stream through the start-up loop and the pre-cracking reactor 201.

The step of flowing the nitrogen heat-up stream through the start-up loop and the pre-cracking reactor 201 comprises:
- a step of feeding the nitrogen heat-up stream to the start-up loop,
- a step of compressing the nitrogen heat-up stream, performed in a startup compressor,
- two steps of heating the nitrogen heat-up stream,
- a step of flowing the nitrogen heat-up stream through the pre-cracking reactor 201

The process comprises a step of conditioning the gas, not represented here, so that it can be recycled to the start-up compressor.

A step 27 of heating the nitrogen heat-up stream is performed in a heat exchanger, and a step 28 of heating the nitrogen heat-up stream is performed in an electrical heater.

Alternatively, the step of heating up the new packed bed from the pre-cracking reactor comprises routing said ammonia feedstock stream that has been heated or routing said pre-heated ammonia stream through the pre-cracking reactor, after the step of opening the pre-cracking reactor inlet valve and the pre-cracking reactor outlet valve.

The process comprises a step 30 of reducing the new packed bed of the pre-cracking reactor 201, comprising:
- a step 31 of fluidically connecting the pre-cracking reactor 201 to a start-up loop of the installation 200, in particular to said start-up loop,
- a step 32 of flowing a reduction stream comprising hydrogen through the start-up loop and the pre-cracking reactor 201. Said reduction stream may comprise hydrogen and nitrogen.

Advantageously, hydrogen is added to the reduction stream in order to limit the speed of the reducing reactions.

In particular, the step of reducing the new packed bed of the pre-cracking reactor comprises a step of adding hydrogen to the nitrogen heat-up stream and flowing the resulting mix through the start-up loop as said reduction stream.

In an embodiment not represented, the step 30 of reducing the new packed bed of the pre-cracking reactor 201 can be performed by routing any of the following streams through the pre-cracking reactor 201:
- a PSA offgas stream,
- an ammonia stream, for example an ammonia stream routed from the provided ammonia feedstock stream or from the feed superheater 205,
- a cracked gas stream.

The process comprises a step 35 of increasing the load of the installation 200, comprising a step of increasing the flow rate of the provided ammonia feedstock stream, in particular increasing the flow rate of the provided ammonia feedstock stream to reach said initial flow rate, in particular to reach the flow rate of the ammonia feedstock stream before the step of reducing the load of the installation 200.

The load increase depends on the amount of product which shall be produced by the installation.

The process comprises a step 41 of increasing the temperature of the pre-heated ammonia stream.

The process comprises a step 40 of closing the bypass line valve 211 to close the bypass line 210.

Alternatively, in an embodiment not represented, the process comprises a step of routing a first part of the ammonia feedstock stream to the pre-cracking reactor for performing an endothermic reaction of ammonia pre-cracking and routing a second part of the ammonia feedstock stream to the main ammonia cracking reactor for performing an endothermic reaction of ammonia cracking and a step of controlling a flow rate of the ammonia feedstock stream through the bypass line 210 by controlling the bypass line valve 211 opening, such as to control the temperature at the feed superheater. This step of controlling the flow rate of the provided ammonia feedstock stream through the bypass line 210 allows to control a proportion of ammonia feedstock stream undergoing an endothermic reaction of ammonia pre-cracking in the pre-cracking reactor 201 and a proportion of the ammonia feedstock stream fed to the superheater without undergoing such endothermic reaction. This allows to control a temperature level in the superheater, in particular a temperature level of a heat exchange coil of the superheater.

In an embodiment not represented, the process comprises a step of opening the bypass line valve 211 to open the bypass line 210 during a start-up of the installation 200, and a step of routing at least a portion of the ammonia feedstock stream through the bypass line 210 during said start-up for performing an endothermic reaction of ammonia cracking.

Advantageously, the step of routing a portion of the ammonia feedstock stream through the bypass line 210 during said start-allows to reduce the time needed for the start-up phase and optimizes the hydrogen and nitrogen production since the plant readily performs ammonia cracking, typically at a reduced load, during start-up.

In this embodiment, the described steps of the process are performed in the following order:
- the step 7 of reducing the load of the installation 200,
- the step 9 of reducing the temperature of the pre-heated ammonia stream,
- the step 2 of opening the bypass line valve 211 to open the bypass line 210,
- the step 3 of closing the pre-cracking reactor inlet valve 213 and the pre-cracking reactor outlet valve 214 to isolate the pre-cracking reactor 201,
- the step 10 of depressurizing the pre-cracking reactor 201,
- the step 13 of oxidizing the packed bed of the pre-cracking reactor 201,
- the step 14 of purging the pre-cracking reactor 201 with nitrogen,
- the step 50 of cooling the pre-cracking reactor,
- the step 4 of unloading the packed bed from the pre-cracking reactor 201,
- the step 5 of loading a new packed bed inside the pre-cracking reactor 201,
- the step 12 of pressurizing the pre-cracking reactor 201,
- the step 20 of purging the air from the pre-cracking reactor 201,
- the step 6 of opening the pre-cracking reactor inlet valve 213 and the pre-cracking reactor outlet valve 214,
- the step 22 of heating up the new packed bed of the pre-cracking reactor 201,
- the step 30 of reducing the new packed bed of the pre-cracking reactor 201,
- the step 40 of closing the bypass line valve 211 to close the bypass line,
- the step 35 of increasing the load of the installation 200,
- the step 41 of increasing the temperature of the pre-heated ammonia stream.

Figure 3 is a schematic representation of a process for producing a hydrogen product from a provided ammonia feedstock stream as performed by the installation 200.

The production of the hydrogen product comprises:
- a step 100 of providing an ammonia feedstock stream, in the main ammonia cracking reactor 203,
- a step 101 of performing an endothermic reaction of ammonia cracking for producing said hydrogen product with said provided ammonia feedstock stream as a feed.

The step 100 of providing an ammonia feedstock stream comprises a step 102 of pre-heating the ammonia feedstock stream, performed in a feed pre-heater 204, thereby producing a pre-heated ammonia stream.

The step 100 of providing an ammonia feedstock stream comprises a step 103 of performing an endothermic reaction of ammonia pre-cracking of the pre-heated ammonia stream, performed in a pre-cracking reactor 201, thus producing a partially converted ammonia stream. As the reaction of ammonia pre-cracking is endothermic, the temperature of the partially converted ammonia stream is lower than the temperature of the pre-heated ammonia stream.

The step 100 of providing an ammonia feedstock stream comprises a step 104 of superheating the pre-heated ammonia stream and/or partially converted ammonia stream, performed in a feed superheater 205, thereby obtaining a superheated ammonia feedstock stream.

During the process for exchanging a packed bed from a pre-cracking reactor 201, the production of the hydrogen product comprises a step 110 of routing the provided ammonia feedstock stream to the main ammonia cracking reactor 203 for performing said endothermic reaction of ammonia cracking while bypassing the pre-cracking reactor 201.

## Claims

1. Process for exchanging a packed bed from a pre-cracking reactor (201) of an installation (200) for producing a hydrogen product from an ammonia feedstock stream, the installation comprising:
- a feed end (202) of the installation,
- said pre-cracking reactor (201) configured to contain said packed bed, said pre-cracking reactor being arranged for receiving the ammonia feedstock stream from said feed end (202) to produce a partially converted ammonia stream,
- a main ammonia cracking reactor (203), arranged for receiving the partially converted ammonia stream,
- a bypass line (210) arranged for routing the ammonia feedstock stream to the main ammonia cracking reactor (203) while bypassing the pre-cracking reactor (201), said bypass line comprising a bypass line valve (211), arranged to fluidically open or close said bypass line,
- a pre-cracking reactor inlet valve (213) and a pre-cracking reactor outlet valve (214), arranged to fluidically isolate the pre-cracking reactor (201) from said feed end (202) and from said main ammonia cracking reactor (203),
the process for exchanging the packed bed comprising the following steps:
• opening (2) the bypass line valve (211) to open the bypass line (210),
• closing (3) the pre-cracking reactor inlet valve (213) and the pre-cracking reactor outlet valve (214) to isolate the pre-cracking reactor (201),
• unloading (4) the packed bed from the pre-cracking reactor (201),
• loading (5) a new packed bed inside the pre-cracking reactor (201),
• opening (6) the pre-cracking reactor inlet valve and the pre-cracking reactor outlet valve,
the process being performed while:
- providing (100) an ammonia feedstock stream,
- in the main ammonia cracking reactor (203), performing (101) an endothermic reaction of ammonia cracking for producing said hydrogen product with said provided ammonia feedstock stream as a feed.

2. Process according to claim 1, wherein the steps of unloading (4) the packed bed from the pre-cracking reactor and loading (5) a new packed bed inside the pre-cracking reactor (201) are performed while routing the provided ammonia feedstock stream to the main ammonia cracking reactor (203), in particular from the feed end (202) of the installation to the main ammonia cracking reactor (203), through said bypass line (210).

3. Process according to any one of the preceding claims, wherein the step of providing (100) an ammonia feedstock stream comprises a step of pre-heating (102) the ammonia feedstock stream, performed in a feed pre-heater (204), thereby producing a pre-heated ammonia stream, the process comprising a step (9) of reducing the temperature of the pre-heated ammonia stream performed before the step (2) of opening the bypass line valve (211) to open the bypass line (210).

4. Process according to any one of the preceding claims, wherein the step of providing (100) an ammonia feedstock stream comprises a step of superheating the partially converted ammonia stream, performed in a feed superheater (205), thereby producing a superheated ammonia feedstock stream.

5. Process according to any one of the preceding claims, comprising a step (7) of reducing the load of the installation, performed before the step (2) of opening the bypass line valve to open the bypass line.

6. Process according to any one of the preceding claims, comprising a step (14) of purging the pre-cracking reactor (201) with nitrogen by routing a purging nitrogen stream through the pre-cracking reactor.

7. Process according to any of the preceding claims, comprising a step of (22) heating up the new packed bed of the pre-cracking reactor (201).

8. Process according to claim 7, wherein the step (22) of heating up the new packed bed of the pre-cracking reactor (201) comprises:
- a step (23) of fluidically connecting the pre-cracking reactor to a start-up loop of the installation,
- a step (24) of flowing a nitrogen heat-up stream through the start-up loop and the pre-cracking reactor.

9. Process according to any one of the preceding claims, comprising a step (35) of increasing the load of the installation, this step being performed after the step (5) of loading the new packed bed to the pre-cracking reactor (201).

10. Process according to any of claims 5 to 9 in combination with claim 4 or according to claim 4, comprising a step of routing a first part of the ammonia feedstock stream to the pre-cracking reactor (201) for performing an endothermic reaction of ammonia pre-cracking and routing a second part of the ammonia feedstock stream through the bypass line to the main ammonia cracking (203) reactor for performing an endothermic reaction of ammonia cracking and a step of controlling a flow rate of the ammonia feedstock stream through the bypass line by controlling the bypass line valve opening, such as to control the temperature at the feed superheater (205).

11. Installation (200) for producing a hydrogen product from an ammonia feedstock stream, said installation comprising:
- a feed end (202) of the installation,
- a pre-cracking reactor (201) configured to contain a packed bed and arranged for receiving the ammonia feedstock stream from said feed end (202) to produce a partially converted ammonia stream,
- a main ammonia cracking reactor (203) arranged for receiving the partially converted ammonia stream,
- a bypass line (210), said bypass line comprising:
• a bypass line valve (211), arranged to fluidically open or close said bypass line,
• a bypass line duct (212) arranged for routing the ammonia feedstock stream to the main ammonia cracking reactor (203) while bypassing the pre-cracking reactor (201),
- a pre-cracking reactor inlet valve (213) and a pre-cracking reactor outlet valve (214) arranged to fluidically isolate the pre-cracking reactor (201) from said feed end (202) and from said main ammonia cracking reactor (203).

12. Installation (200) according to claim 11, wherein the bypass line duct (212) is arranged for routing the ammonia feedstock stream from the feed end (202) of the installation to the main ammonia cracking reactor (203) while bypassing the pre-cracking reactor (201).

13. Installation according to any one of the claims 11 to 12, comprising a nitrogen stream purge line (235) arranged for routing a purging nitrogen stream through the pre-cracking reactor (201), said nitrogen stream purge line (235) comprising:
- a nitrogen supply (236) duct arranged for routing the purging nitrogen stream to the pre-cracking reactor (201),
- a purge discharge duct (235) arranged for routing the purging nitrogen stream from the pre-cracking reactor (201) to a fired equipment (222) as a portion of a waste gas or to an open vent,
- at least one nitrogen stream purging valve (238) arranged to open or to close the nitrogen stream purge line (235).

14. Installation according to any one of the claims 11 to 13, comprising at least one double block and bleed valve, said double block and bleed valve comprising:
- two shut-off valves (245) fluidically arranged in series, each shut-off valve being configured for, in a closed position of the shut-off valve, preventing a gas stream from circulating,
- a bleed valve (246) fluidically connected between said two shut off valves (245) to purge a gas contained between said shut-off valves in said closed position.

15. Installation (200) according to claim 14, wherein the bypass line valve (211) and/or the pre-cracking reactor inlet valve (213) and/or the pre-cracking reactor outlet valve (214) is a double block and bleed valve as in claim 14.
